# EUROPÄISCHE PATENTSCHRIFT

(11) **EP 1 307 989 B1**
(45) Veröffentlichungstag und Bekanntmachung des Hinweises auf die Patenterteilung: **19.11.2008**
(21) Anmeldenummer: 01965151.2
(22) Anmeldetag: 30.07.2001
(51) Int. Cl.: H04L 1/16, H04L 12/40

(54) **KOMMUNIKATIONSVERFAHREN**
COMMUNICATION METHOD
PROCEDE DE COMMUNICATION

(30) Priorität: 10.08.2000 EP 00117177
(43) Veröffentlichungstag der Anmeldung: 07.05.2003
(73) Patentinhaber: SIEMENS AKTIENGESELLSCHAFT, 80333 München (DE)
(72) Erfinder: STEINDL, Günter, 92284 Poppenricht (DE)
(86) Internationale Anmeldenummer: PCT/EP2001/008820
(87) Internationale Veröffentlichungsnummer: WO 2002/013450

(56) Entgegenhaltungen:
- DE-A- 19 509 558
- DE-A- 19 620 137
- US-A- 4 896 151
- CENA G ET AL: "Standard field bus networks for industrial applications" 1995 , COMPUTER STANDARDS AND INTERFACES,CH,ELSEVIER SEQUOIA. LAUSANNE, VOL. 17, NR. 2, PAGE(S) 155-167 XP004046736 ISSN: 0920-5489 Seite 159, linke Spalte, Absatz 3 -rechte Spalte, Absatz 3

## Beschreibung

Die Erfindung betrifft ein Verfahren zur zyklischen Kommunikation zwischen zur Steuerung oder Überwachung eines technischen Prozesses vorgesehenen Kommunikationsteilnehmern über einen Bus, bei dem während jeweils eines Buszyklusses vorgebbarer Dauer für die Kommunikationsteilnehmer projektierte Kommunikationsbeziehungen abgewickelt werden.

Ein derartiges Kommunikationsverfahren ist aus G. Cena, et.al, "Standard field bus networks for industrial applications", aus: Computer Standards & Interfaces, 17 (1995), S. 155-167 sowie aus der Norm EN 50 170 oder PROFIBUS-Norm bekannt. Der PROFIBUS ist ein so genannter Feldbus, der zur kommunikativen Verbindung von zur Automatisierung eines technischen Prozesses vorgesehenen Kommunikationsteilnehmern verwendet wird. Ein Kommunikationsteilnehmer an diesem oder einem ähnlichen Bus ist z.B. eine so genannte speicherprogrammierbare Steuerung (SPS). Ein weiterer Kommunikationsteilnehmer am Bus ist z.B. ein so genanntes dezentrales Peripheriegerät, an das externe Sensorik oder Aktorik zur Steuerung oder Überwachung des technischen Prozesses anschließbar ist.

Die Steuerung eines technischen Prozesses schließt häufig auch Regelungsaufgaben ein. Dabei umfasst die Regelung das Aufnehmen eines Messwertes aus dem technischen Prozess und das Ausgeben einer Steuerinformation an den technischen Prozess. Sowohl das Aufnehmen des Messwertes als auch das Ausgeben der Steuerinformation erfolgt üblicherweise zyklisch. Da somit der Messwert nicht kontinuierlich, sondern nur jeweils zum Zeitpunkt seiner Aufnahme, d. h. zum Abtastzeitpunkt zur Verfügung steht, handelt es sich um eine Abtastregelung, deren Güte oder Stabilität maßgeblich von der Äquidistanz der Abtastzeitpunkte abhängt.

Häufig wird der Messwert aus dem Prozess von einem ersten Kommunikationsteilnehmer aufgenommen und von einem zweiten Kommunikationsteilnehmer verarbeitet. Dieser zweite Kommunikationsteilnehmer generiert auch anhand des Messwertes die auszugebende Steuerinformation. Die Steuerinformation wird dann von einem dritten Kommunikationsteilnehmer an den Prozess ausgegeben. Damit ist der Abstand zwischen zwei Abtastzeitpunkten und daher die Abtastfrequenz durch die Dauer der Kommunikation zwischen den jeweiligen Kommunikationsteilnehmern bestimmt .

Zur Gewährleistung einer Äquidistanz der Abtastzeitpunkte ist z.B. beim PROFIBUS eine konstante Buszykluszeit vorgesehen.
Die Buszykluszeit ist derjenige Zeitabschnitt, im dem sämtliche für die an den Bus angeschlossenen Kommunikationsteilnehmer projektierten zyklischen Kommunikationsbeziehungen genau einmal abgewickelt werden. Ein Kommunikationsverfahren mit konstanter Buszykluszeit ist z.B. aus der deutschen Patentanmeldung 199 39 182 (Anmeldetag 20.08.1999) bekannt.

Eine Kommunikation umfasst den Transfer eines Telegramms über den Bus vom sendenden zum empfangenden Kommunikationsteilnehmer. Die für den Transfer eines Telegramms erforderliche Zeit ist wesentlich durch die transferierte Datenmenge bestimmt. Die Datenmenge zyklischer Kommunikationen ist jedoch im Wesentlichen konstant. Damit ergibt sich bei konstanter Buszykluszeit eine näherungsweise Äquidistanz zwischen den einzelnen Kommunikationen. Mit einer näherungsweisen Äquidistanz der einzelnen Kommunikationen geht eine näherungsweise Äquidistanz der Abtastzeitpunkte einher, denn der aus dem Prozess aufgenommene Messwert ist ein Datum einer Kommunikation bzw. eines Telegramms.

Zur Gewährleistung tatsächlicher Äquidistanz ist die Buszykluszeit länger als die Zeit, die für die Abwicklung sämtlicher projektierter Kommunikationen erforderlich wäre. Die zusätzliche Zeit steht als Reserve für Telegrammwiederholungen und so genannte azyklische Telegramme zur Verfügung. Sind in einem Buszyklus keine Telegrammwiederholungen erforderlich oder stehen keine azyklischen Telegramme zum Transfer an, so wird mit dem Beginn des nächsten Buszyklusses dennoch gewartet, bis die vorgegebene Buszykluszeit (inklusive der Reservezeit) verstrichen ist. Damit ergibt sich für die projektierten Kommunikationen ein festes Zeitraster, mit dem sich die Äquidistanz der Abtastungen gewährleisten lässt.

Nachteilig bei diesem bekannten Kommunikationsverfahren ist jedoch, daß diese Äquidistanz im Falle einer gestörten Kommunikationsbeziehung nicht mehr gewährleistet ist. Gemäß der EN 50 170 wird im Falle einer gestörten Kommunikationsbeziehung diese im selben Buszyklus zwischen einmal (1-mal) und fünfzehnmal (15-mal) wiederholt. Dies führt dazu, daß sich die Dauer des Buszyklusses um die Dauer, die sich für die Wiederholung der gestörten Kommunikationsbeziehung ergibt, verlängert wird. Eine Äquidistanz einzelner Kommunikationsbeziehungen über mehrere Buszyklen hinweg - wie sie insbesondere für kritische Abtastregelungen erforderlich ist - lässt sich mit dem bekannten Kommunikationsverfahren im Falle von Kommunikations- und/oder Übertragungsstörungen nicht gewährleisten.

Grund hierfür ist, dass jede Kommunikationsbeziehung, die im Buszyklus zeitlich nach der gestörten Kommunikationsbeziehung abgewickelt wird, im Vergleich zu einem "normalen" Buszyklus, d. h. einem Buszyklus ohne gestörte Kommunikationsbeziehung zeitversetzt ist. Damit sinkt auch die Güte einer Abtastregelung. Im Extremfall kann sogar die Stabilität der Abtastregelung in Frage gestellt sein.

Weitere Verfahren zur fehlersicheren Übertragung von Daten zwischen Kommunikationsteilnehmern eines Bussystems sind aus US 4,896,151 A, DE 196 20 137 A1 und DE 195 09 558 A1 bekannt.

Der Erfindung liegt daher die Aufgabe zugrunde, ein Kommunikationsverfahren anzugeben, mit dem eine äquidistante Abtastung eines Messwertes des technischen Prozesses auch noch im Falle von Übertragungsstörungen möglich ist.

Diese Aufgabe wird erfindungsgemäß mit den Merkmalen des Anspruchs 1 gelöst. Vorteilhafte Weiterbildungen und Ausgestaltungen sind Gegenstand der Unteransprüche.

Dazu ist bei einem Verfahren zur zyklischen Kommunikation zwischen zur Steuerung oder Überwachung eines technischen Prozesses vorgesehenen Kommunikationsteilnehmern über einen Bus, bei dem während jeweils eines Buszyklusses vorgebbarer Dauer Kommunikationsbeziehungen abgewickelt werden, die für die Kommunikationsteilnehmer projektiert wurden, vorgesehen, dass eine gestörte Kommunikationsbeziehung mit einem Sonderquittierungscode quittiert wird, der im laufenden Buszyklus wie ein eine ungestörte Kommunikationsbeziehung anzeigender Normalquittierungscode ausgewertet wird, und dass eine Wiederholung der gestörten Kommunikationsbeziehung für einen folgenden Buszyklus eingeplant wird. Gemäß einer Alternative unterbleibt nach einer gestörten Kommunikationsbeziehung, die mit einem Sonderquittierungscode quittiert wird, eine Wiederholung der gestörten Kommunikationsbeziehung. Dies ist tolerierbar, da bei einer zyklischen Kommunikation an die Stelle einer Wiederholung die Kommunikationsbeziehung des nächsten Zyklusses tritt. Dabei ist einstellbar, ob überhaupt keine, eine, zwei, etc. Wiederholungen der gestörten Kommunikationsbeziehung erfolgen sollen.

Die mit der Erfindung erzielten Vorteile bestehen insbesondere darin, dass die Dauer des Buszyklusses mit der gestörten Kommunikationsbeziehung von Wiederholungs- und/oder Korrekturmaßnahmen unbeeinflusst bleibt. Dies wird mit der Verlagerung einer Wiederholung einer gestörten Kommunikationsbeziehung in einen folgenden Buszyklus erreicht. Bei einer unmittelbaren Wiederholung einer gestörten Kommunikationsbeziehung im selben Buszyklus verschiebt sich - bezogen auf den Buszyklus - der Startzeitpunkt sämtlicher Kommunikationsbeziehungen, die im Buszyklus der gestörten Kommunikationsbeziehung nachfolgen. Eine Äquidistanz dieser verschobenen Kommunikationsbeziehungen über mehrere Buszyklen wäre nicht mehr gewährleistet.

Werden mittels der verschobenen Kommunikationsbeziehungen Werte übermittelt, die in eine Abtastregelung eingehen, ist die Abtastfrequenz der betreffenden Abtastregelungen nicht mehr konstant, womit eine Verschlechterung der Güte der Abtastregelung, ggf. sogar eine Instabilität der Abtastregelung einhergeht. Durch die Verlagerung der Wiederholung einer gestörten Kommunikationsbeziehung in einen folgenden Buszyklus bleiben die Startzeitpunkte der nachfolgenden Kommunikationen im Wesentlichen unbeeinflusst. Damit ist auch die Äquidistanz der einzelnen Kommunikationsbeziehungen über mehrere Buszyklen gewährleistet, so dass das Kommunikationsverfahren auch für kritische Abtastregelungen geeignet ist.

Damit im Buszyklus mit der gestörten Kommunikationsbeziehung jegliche Wiederholungs- und/oder Korrekturmaßnahmen unterbleiben, wird die gestörte Kommunikationsbeziehung mit einem Sonderquittierungscode quittiert. Dieser führt dabei dazu, dass gerade Wiederholungs- und/oder Korrekturmaßnahmen unterbleiben, so dass die Abwicklung der restlichen für den Buszyklus projektierten Kommunikationsbeziehungen erfolgen kann.

Sollten im selben Buszyklus weitere gestörte Kommunikationsbeziehungen auftreten, werden auch die weiteren gestörten Kommunikationsbeziehungen wie die erste gestörte Kommunikationsbeziehung behandelt. D. h. auch deren Wiederholung wird in einen nachfolgenden Buszyklus verlagert.

Damit die Wiederholung einer gestörten Kommunikationsbeziehung in einem folgenden Buszyklus nicht die Äquidistanz der für diesen folgenden Buszyklus projektierten Kommunikationsbeziehungen beeinträchtigt, erfolgt die Wiederholung der gestörten Kommunikationsbeziehung im Anschluß an die für diesen Buszyklus projektierten Kommunikationsbeziehungen. Indem die Wiederholung der gestörten Kommunikationsbeziehung im Anschluß an die für diesen Buszyklus projektierten Kommunikationsbeziehungen erfolgt, bleiben deren Startzeitpunkte - bezogen auf den Buszyklus - unbeeinflusst. Die Äquidistanz der Kommunikationsbeziehungen über mehrere Buszyklen ist damit auch bei der Wiederholung der gestörten Kommunikationsbeziehung gewährleistet.

Vorteilhaft wird die Wiederholung der gestörten Kommunikationsbeziehung für einen dem Buszyklus mit der gestörten Kommunikationsbeziehung unmittelbar folgenden Buszyklus eingeplant. Dadurch bleibt die Zeitdifferenz zwischen der gestörten Kommunikationsbeziehung, dem Zeitpunkt der geplanten Abwicklung, und der Wiederholung, dem Zeitpunkt der tatsächlichen Abwicklung, so gering wie möglich.

Wenn die gestörte Kommunikationsbeziehung mit dem Sonderquittierungscode wie eine fehlerfreie Kommunikationsbeziehung quittiert wird, wird eine Verzögerung der Abwicklung der im Buszyklus folgenden Kommunikationsbeziehungen vermieden. Nur bei einer fehlerfrei abgewickelten oder als fehlerfrei abgewickelt quittierten Kommunikationsbeziehung kann mit der Abwicklung der im Buszyklus folgenden Kommunikationsbeziehungen fortgefahren werden. Durch die Quittierung der gestörten Kommunikationsbeziehung mit dem Sonderquittierungscode unterscheidet diese sich nicht von einer fehlerfreien Kommunikationsbeziehung. Der Beginn der Abwicklung der im Buszyklus folgenden Kommunikationsbeziehungen wird damit nicht durch eine eventuelle Auswertung eines speziellen Quittierungscodes verzögert.

Vorteilhaft wird der Sonderquittierungscode in einen Normalquittierungscode umgewandelt. Dadurch wird die Anzahl der zu überprüfenden möglichen Quittierungscodes verringert, so daß trotz eines faktisch zusätzlichen Quittierungscodes die Komplexität der Analyse der möglichen Quittierungscodes nicht erhöht wird. Der Normalquittierungscode ist derjenige Quittierungscode, der eine fehlerfrei abgewickelte Kommunikationsbeziehung kennzeichnet. Die Umwandlung des Sonderquittierungscodes in einen Normalquittierungscode kann z.B. durch eine so genannte "Maskierung" erfolgen. Wenn sich z.B. der Sonderquittierungscode von dem Normalquittierungscode nur durch das gesetzte erste Bit unterscheidet, kann die Maskierung durch eine logische UND-Verknüpfung des Sonderquittierungscodes z.B. mit dem Hexadezimalwert "7FFF" erfolgen.

Wenn ein Wiederholungszähler vorgesehen ist, mit dem die Anzahl der Wiederholungen der gestörten Kommunikationsbeziehung gezählt wird, ist jederzeit ermittelbar, wie lange die Störung der Kommunikationsbeziehung bereits besteht.

Ist ein Grenzwert für den Wiederholungszähler vorgesehen und wird ab Erreichen des Grenzwertes jede Wiederholung der gestörten Kommunikationsbeziehung mit einem Fehlerquittierungscode quittiert, kann eine Störung einer Kommunikationsbeziehung, die "zu lange" andauert, erkannt werden.

Zweckmäßigerweise ist der Grenzwert, bei dessen Erreichen jede Wiederholung der gestörten Kommunikationsbeziehung mit einem Fehlerquittierungscode quittiert wird, vorgebbar. Damit ist diejenige Zeitspanne, nach deren Verstreichen eine Störung einer Kommunikationsbeziehung "zu lange" ansteht, vorgebbar. Dabei ist der Grenzwert für jede Kommunikationsbeziehung individuell vorzugsweise vorgebbar. Damit kann der Grenzwert für eine Kommunikationsbeziehung, die z.B. Daten für eine kritische erste Abtastregelung liefert, auf einen anderen Grenzwert eingestellt werden, als derjenige einer Kommunikationsbeziehung, mit der lediglich Protokolldaten übermittelt werden.

Wenn der Wiederholungszähler durch den an der gestörten Kommunikationsbeziehung beteiligten Kommunikationsteilnehmer auslesbar ist, ist für diesen jederzeit ermittelbar, ob und ggf. wie lange eine Kommunikationsbeziehung gestört ist.

Wenn mindestens ein Schwellwert für den Wiederholungszähler vorgesehen ist und durch den den Wiederholungszähler auslesenden Kommunikationsteilnehmer bei Erreichen des Schwellwertes projektierte Maßnahmen eingeleitet werden, kann auch schon vor Erreichen des Grenzwertes in geeigneter Weise auf die Störung der Kommunikationsbeziehung reagiert werden. Beispielsweise kann bei Erreichen eines ersten Schwellwertes ein entsprechender Hinweis, etwa auf einem Bildschirm oder Drucker, ausgegeben werden, bei Erreichen eines zweiten Schwellwertes eine optische oder akustische Warnmeldung und bei Erreichen eines dritten Schwellwertes Fehlerbegrenzungsmaßnahmen eingeleitet werden. Die Fehlerbegrenzungsmaßnahmen könnte z.B. darin bestehen, dass versucht wird, die Kommunikationsbeziehung auf einem anderen Weg herzustellen - etwa bei einem redundanten Bus -, oder dass der technische Prozess - ggf. der von dem Kommunikationsteilnehmer gesteuerte Teilprozess - in einen sicheren Zustand überführt wird.

Vorteilhaft ist eine Struktur in einem Speicher zumindest eines Kommunikationsteilnehmers vorgesehen, die für jede Kommunikationsbeziehung ein Feld aufweist, in dem in einer ersten Position der Wert des Wiederholungszählers, in einer zweiten Position der Grenzwert und in einer dritten Position der mindestens eine Schwellwert zusammen mit einer Referenz auf die bei Erreichen des Schwellwertes einzuleitende Maßnahme gespeichert ist. Die Struktur dient zur kompakten Speicherung der wesentlichen Daten, die zur Abwicklung des Kommunikationsverfahrens vorgesehen sind. Durch die Speicherung einer Referenz auf die bei Erreichen des Schwellwertes einzuleitende Maßnahme ist der direkte Aufruf einer Programmroutine, in der die Maßnahme programmiert ist, möglich.

Nachfolgend wird ein Ausführungsbeispiel der Erfindung anhand einer Zeichnung näher erläutert. Darin zeigen:
- FIG 1: über einen Bus kommunikativ verbundene Kommunikationsteilnehmer zur Steuerung eines technischen Prozesses,
- FIG 2a u. 2b: Kommunikationsbeziehungen zwischen einzelnen Kommunikationsteilnehmern,
- FIG 3: fehlerfrei abgewickelte Kommunikationsbeziehungen während zweier Buszyklen,
- FIG 4: eine Telegrammwiederholung als Folge einer gestörten Kommunikationsbeziehung,
- FIG 5: eine Telegrammwiederholung in einem späteren Buszyklus,
- FIG 6: ein Layout einer Datenstruktur, und
- FIG 7: ein Flussdiagramm.

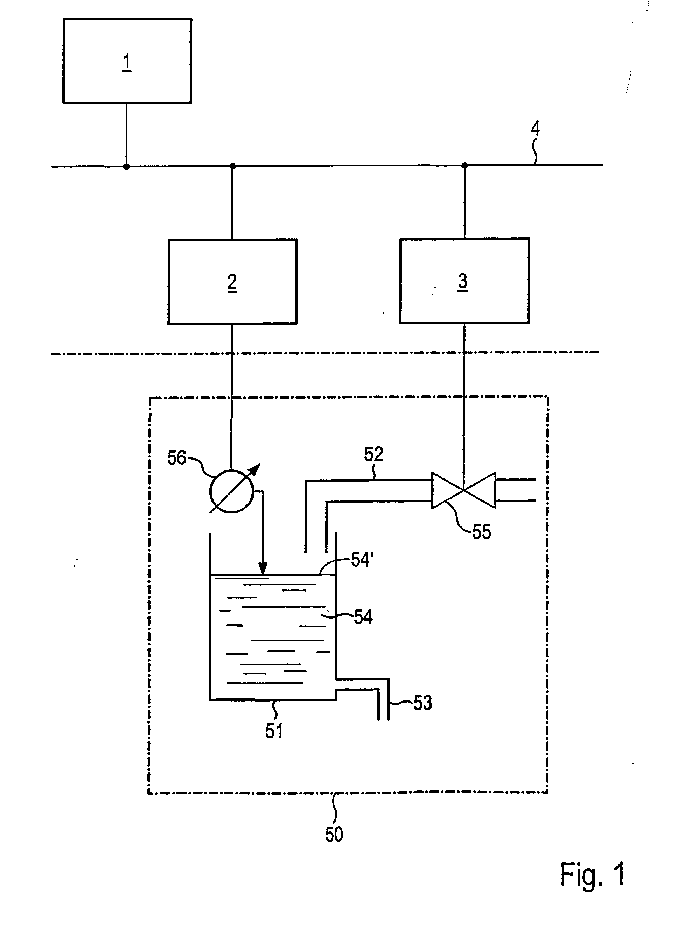

FIG 1 zeigt Kommunikationsteilnehmer 1, 2, 3, wobei der mit dem Bezugszeichen 1 bezeichnete Kommunikationsteilnehmer ein so genannter Master 1 - z.B. eine speicherprogrammierbare Steuerung - und die mit dem Bezugszeichen 2, 3 bezeichneten Kommunikationsteilnehmer so genannte Slaves 2, 3 - z.B. dezentrale Peripheriegeräte - sind. Die Kommunikationsteilnehmer 1, 2, 3 sind über einen Bus 4 kommunikativ miteinander verbunden.

Der Master 1 ist ein Kommunikationsteilnehmer, der am Bus 4 eine aktive Sendeberechtigung hat. Ein Slave 2, 3 sendet dagegen nur dann, wenn er zuvor vom Master 1 angesprochen wurde. Dem Slave 2, 3 fehlt damit gerade die aktive Sendeberechtigung, denn er reagiert nur auf eine Anforderung (das Ansprechen) durch den Master 1.

Die Kommunikationsteilnehmer 1, 2, 3 sind zur Steuerung oder Überwachung eines schematisch dargestellten technischen Prozesses 50 vorgesehenen. Der technische Prozess 50 umfasst einen Reaktor 51 mit einem Zulauf 52 und einem Abfluss 53. Der Reaktor 51 wird durch den Zulauf 52 gespeist. Über den Abfluß 53 verlässt ein Reagenz 54 den Reaktor 51. Der Zulauf 52 wird durch ein Ventil 55 gesteuert. Mittels eines Füllstandsmessers 56 wird ein Füllstand 54' des Reaktors 51 ermittelt.

Eine einfache Steuerung und/oder Überwachung (Automatisierung) des technischen Prozesses 50, die im folgenden exemplarisch herangezogen wird, kann darin bestehen, dass das Ventil 55 im Hinblick auf einen konstanten Füllstand 54' des Reaktors 51 gesteuert wird.

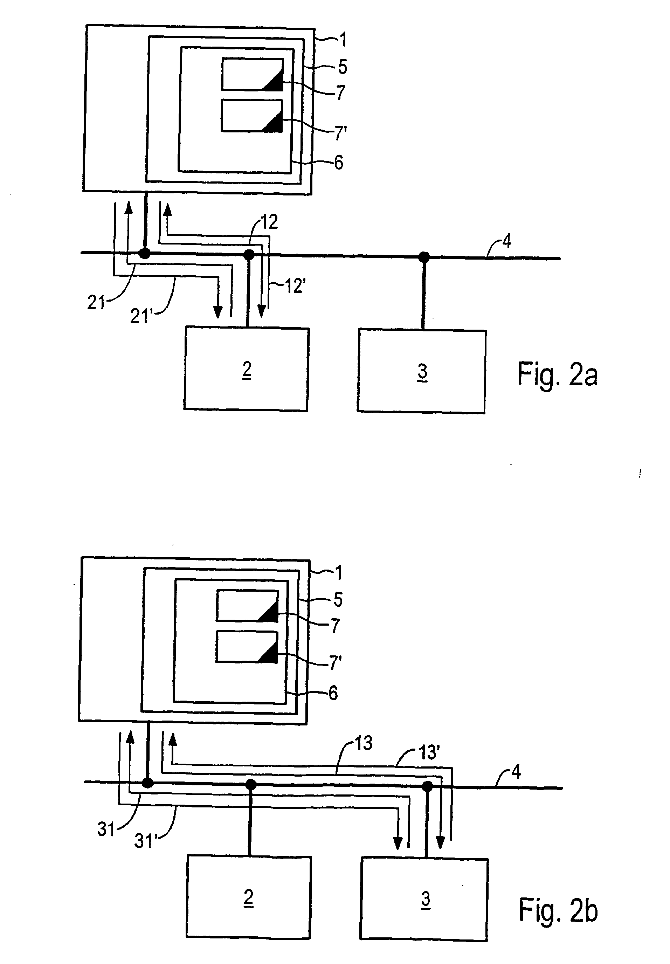

Die Figuren 2a und 2b zeigen für diese Automatisierung den Datenaustausch bzw. die Kommunikationsbeziehungen 12, 21, 13, 31 zwischen den Kommunikationsteilnehmern 1, 2, 3. Der Datenaustausch erfolgt dabei unter Steuerung eines in einem Speicher 5 abgelegten Programmes 6, das vom Master 1 ausgeführt wird. Das Programm 6 umfasst dazu eine Task 7, 7', die in einem festen Zeitraster ausgeführt wird und dabei z.B. alle 500ms aufgerufen wird. Mit jeder Ausführung der Task 7, 7' erfolgt ein Datenaustausch 12, 21 bzw. 13, 31 zwischen dem Master 1 und dem Slave 2 (FIG 2a) und zwischen dem Master 1 und dem Slave 3 (FIG 2b).

Entsprechend einer projektierten Kommunikationsbeziehung findet ein Datenaustausch zwischen den betreffenden Kommunikationsteilnehmern 1, 2, 3 statt. Der Datenaustausch erfolgt mittels eines Telegramms 12, 21, 13, 31. Im folgenden werden die Begriffe Kommunikation/Kommunikationsbeziehung und Telegramm daher synonym gebraucht. Wenn der Master 1 einen Slave 2, 3 anspricht, erfolgt dies mittels eines Telegramms 12, 13. Der Slave 2, 3 reagiert auf diesen Stimulus seinerseits mit einem Telegramm 21, 31.

FIG 2a zeigt ein Telegramm 12, das der Master 1 dem Slave 2 sendet. Das Telegramm 12 umfasst z.B. Ausgabe- und Steuerdaten in Form von Digital- und/oder Analogwerten, z.B. einen Maximalwert für den Füllstand 54'. Das Telegramm 12 veranlasst den Slave 2 aber auch, seine Eingabedaten in einem Telegramm 21 an den Master 1 zu senden. Das Telegramm 21 enthält damit insbesondere einen den Füllstand 54' des Reaktors 51 repräsentierenden Wert, der mittels des Füllstandsmessers 56 aufgenommen wurde. Das Telegramm 12 erteilt implizit dem nicht aktiv sendeberechtigten Slave 2 eine Berechtigung zum Transfer der vom Master 1 angeforderten Daten. Die erfolgt mittels des Telegramms 21.

FIG 2b zeigt ein Telegramm 13, mit dem der Master 1 dem Slave 3 die jeweiligen Ausgabedaten sendet. Das Telegramm 13 umfasst Ausgabe- und/oder Steuerdaten in Form von Digital- oder Analogwerten, darunter auch einen die Stellung des Ventils 55 vorgebenden Wert. Das Telegramm 13 veranlasst den Slave 3 seine Eingabedaten, z.B. auch einen die Ist-Durchflussmenge durch den Zufluss 12 repräsentierenden Wert, in einem Telegramm 31 an den Master 1 zu senden.

Ein Telegramm 12, 13, 21, 31 wird stets quittiert 12', 13', 21', 31'. Die fehlerfreie, nicht gestörte Übermittlung eines Telegramms 12, 13, 21, 31 wird mit einer Normalquittierung quittiert, die angibt, dass die Kommunikation 12, 13, 21, 31 fehlerfrei abgewickelt wurde. Die Normalquittierung umfasst z.B. einen Normalquittierungscode (nicht dargestellt) mit dem Wert '0x00'.

Die Automatisierung des technischen Prozesses 50 (FIG 1) erfordert eine Regelung, um den Füllstand 54' des Reaktors 51 konstant zu halten. Nachdem das Telegramm 21 den Messwert des Füllstands 54' umfasst und dieser damit nur dann "abgetastet" wird, wenn der Slave 2 das entsprechende Telegramm 21 an den Master 1 übermittelt, handelt es sich um eine Abtastregelung. Die Qualität/Stabilität einer solchen Abtastregelung ist maßgeblich durch den Zeitabstand zwischen zwei Abtastungen eines Prozessparameters (hier der Füllstand 54') bestimmt. Um eine stabile Regelung zu erreichen, erfordern die zugrundeliegenden mathematischen Regelungsmodelle eine Abtastung zu äquidistanten Zeitpunkten.

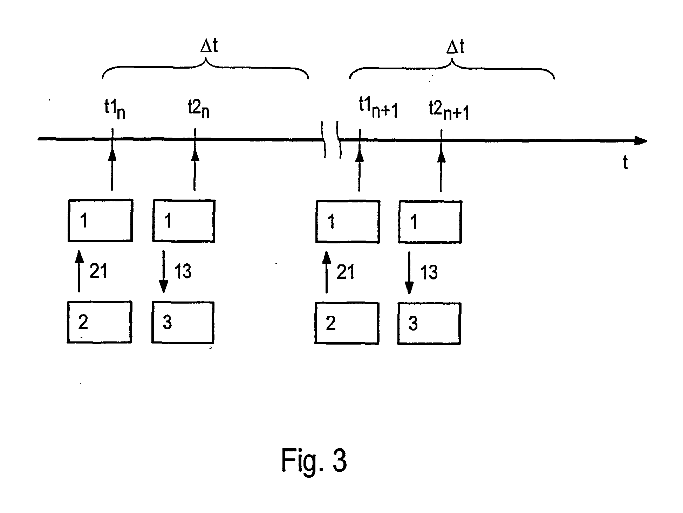

FIG 3 zeigt schematisch die auf einer Zeitachse aufgetragenen Zeitpunkte t1ₙ, t2ₙ, t1ₙ₊₁, t2ₙ₊₁, zu denen die Telegramme 21, 13 an bzw. von dem entsprechenden Slave 2, 3 übermittelt werden. Mit dem Telegramm 21 wird vom Slave 2 der aktuelle Füllstand 54' des Reaktors 51 an den Master 1 übermittelt. Zu den Zeitpunkten t1ₙ, t1ₙ₊₁ erfolgt damit das Abtasten des Prozessparameters "Füllstand" 54'. Mit dem Telegramm 13 wird vom Master 1 dem Slave 3 die neue Stellung des Ventils 55 vorgegeben wird. Die Telegramme 12 (FIG 2a) und 31 (FIG 2b) sind aus Gründen der Übersichtlichkeit nicht dargestellt.

Für eine stabile Regelung des Füllstands 54' ist maßgeblich, dass die Zeitspanne zwischen zwei aufeinander folgenden Zeitpunkten t1ₙ, t1ₙ₊₁, zu denen der Füllstand 54' abgetastet wird, konstant bleibt. Die Zeitdifferenz zwischen dem Zeitpunkt t1ₙ und t2ₙ₊₁, d. h. der Aufnahme des Füllstandes 14' bzw. der Ausgabe des daraus resultierenden Stellwertes an den Prozess 50, stellt eine Totzeit dar, die mathematisch ohne weiteres berücksichtigt und kompensiert werden kann.

Bei einer nicht gestörten, fehlerfreien Kommunikation ist die Äquidistanz zwischen zwei aufeinander folgenden Zeitpunkten t1ₙ, t1ₙ₊₁, durch das feste Zeitraster gewährleistet, in dem die Task 7, 7' (FIG 2a, 2b) ausgeführt wird, unter deren Kontrolle die Kommunikationsbeziehungen abgewickelt werden.

Die Zeitspanne Δt bezeichnet die Dauer eines Buszyklusses, wobei die Begriffe Buszyklus und Dauer eines Buszyklusses im folgenden synonym verwendet werden. Die Dauer eines Buszyklusses (Buszykluszeit) Δt ist konstant. Während eines Buszyklusses Δt werden sämtliche projektierten Kommunikationsbeziehungen abgewickelt. Wenn in einen Buszyklus Δt der Startzeitpunkt der Task 7,7' (FIG 2a, 2b) fällt, unter deren Kontrolle der Datenaustausch 21, 13 zwischen dem Master 1 und den Slaves 2, 3 abgewickelt wird, gehören die Kommunikationsbeziehungen 21, 13 zu den für diesen Buszyklus Δt projektierten Kommunikationsbeziehungen.

In FIG 3 sind zwei Buszyklen Δt dargestellt, die jeweils die Kommunikationsbeziehungen 21, 13 umfassen. Diese beiden Buszyklen Δt folgen - angedeutet durch den unterbrochenen Zeitstrahl - zeitlich nicht direkt aufeinander. Zwischen den beiden dargestellten Buszyklen werden ein oder mehrere weitere Buszyklen abgewickelt, die nicht die Kommunikationsbeziehungen 21, 13 umfassen.

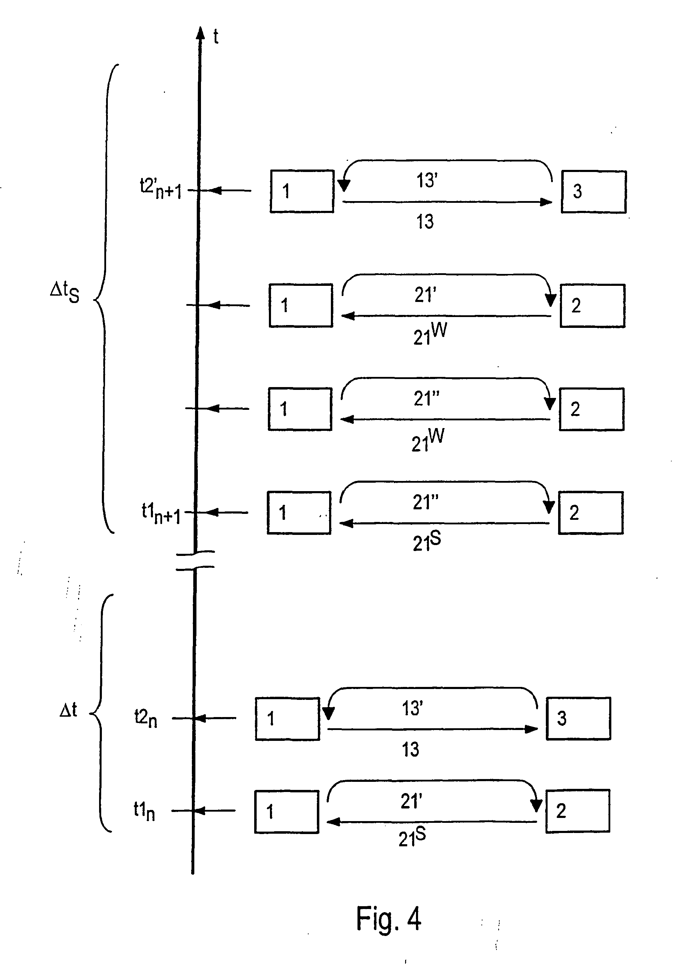

FIG 4 zeigt die Auswirkung einer gestörten Kommunikationsbeziehung 21^{s} auf die Dauer eines Buszyklusses Δt. Im zweiten dargestellten Buszyklus Δtₛ tritt im Zeitpunkt t1ₙ₊₁ eine Störung auf, die die Abwicklung der Kommunikationsbeziehung 21 beeinträchtigt. Die gestörte Kommunikationsbeziehung 21^{s} wird mit einer Fehlerquittung 21" quittiert. Jede Quittung 21', 21" umfasst einen Quittierungscode 21', 21", so dass auch diese Fehlerquittung 21" einen Fehlerquittierungscode 21" umfasst, der eindeutig die Art des Fehlers angibt. Auf die gestörte Kommunikationsbeziehung 21^{s} folgt eine Wiederholung 21^{w} der gestörten Kommunikationsbeziehung. Auch die erste Wiederholung 21^{w} der gestörten Kommunikationsbeziehung kann nicht fehlerfrei abgewickelt werden und wird deshalb mit einer Fehlerquittung 21" quittiert. Erst nach der zweiten Wiederholung 21^{w} kann diese fehlerfrei abgewickelt werden. Die fehlerfrei abgewickelte zweite Wiederholung 21^{w} wird entsprechend mit einer Normalquittung 21' quittiert. Die Normalquittung 21' umfasst einen Normalquittierungscode 21' der die fehlerfreie Abwicklung angibt.

Insgesamt wird damit die Kommunikationsbeziehung 13 zeitlich entsprechend später abgewickelt, nämlich erst zum Zeitpunkt t2'ₙ₊₁. Bei einem Buszyklus Δt (FIG 3), der durch keine gestörte Kommunikationsbeziehung belastet ist, erfolgt die Abwicklung dagegen zum Zeitpunkt t2ₙ₊₁. Der Zeitverzug, um den die Kommunikationsbeziehung 13 später abgewickelt wird, entspricht der Dauer der zwei Wiederholungen 21^{w} der gestörten Kommunikationsbeziehung 21^{s}.

Mit dem Telegramm 13 wird der neue Wert für die Stellung des Ventils 55 (FIG 1) übermittelt. Der Eingriff in die Regelung erfolgt damit verspätet, d. h. nicht mehr zu äquidistanten Zeitpunkten, so dass ggf. der Füllstand 54' (FIG 1) nicht mehr konstant gehalten werden kann. Je dynamischer die Regelstrecke ist, desto stärker wird dadurch die Güte der Regelung beeinflußt. Im Extremfall kann sogar die Stabilität der Regelung in Frage gestellt sein. Des Weiteren ist die Dauer Δtₛ des Buszyklusses mit der gestörten Kommunikation 21^{s} im Vergleich zu der Dauer Δt des Buszyklusses mit der fehlerfrei abgewickelten Kommunikation 21 verlängert. Dies führt dazu, dass auch Kommunikationsbeziehungen, die in jedem Buszyklus abgewickelt werden, nicht mehr äquidistant sind.

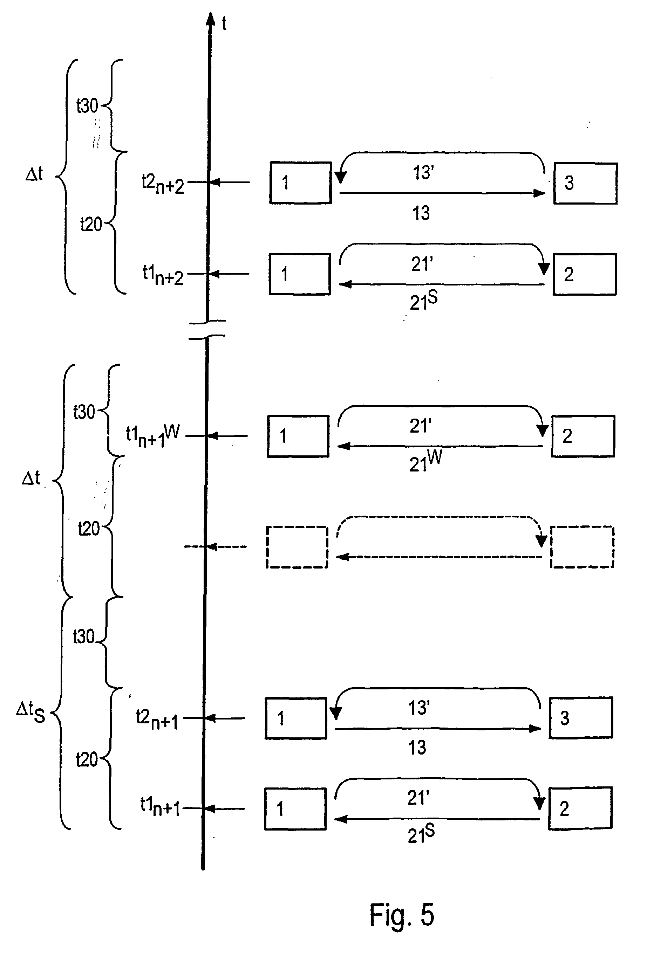

FIG 5 zeigt die Gewährleistung der Äquidistanz auch im Falle einer gestörten Kommunikationsbeziehung 21^{s}. Dargestellt sind zwei unmittelbar aufeinander folgende Buszyklen Δts, Δt. Im ersten Buszyklus Δtₛ tritt eine Störung 21^{s} auf. Ein dritter Buszyklus Δt wird zeitlich später - angedeutet durch den unterbrochenen Zeitstrahl - abgewickelt.

Analog tritt bei der Abwicklung der Kommunikationsbeziehung 21 - im Zeitpunkt t1ₙ₊₁ - eine Störung 21^{s} auf. Die gestörte Kommunikationsbeziehung 21^{s} wird mit einer Sonderquittierung 21', die einen Sonderquittierungscode 21' umfasst, wie eine fehlerfrei abgewickelte Kommunikationsbeziehung quittiert. D.h. der Sonderquittierungscode 21' wird in einen Normalquittierungscode 21' umgewandelt oder der Sonderquittierungscode 21' wird wie ein Normalquittierungscode 21' ausgewertet. Damit unterbleibt eine unmittelbare Wiederholung der gestörten Kommunikationsbeziehung 21^{s} im selben Buszyklus Δtₛ. Die Wiederholung der gestörten Kommunikationsbeziehung 21^{s} wird dagegen für den folgenden Buszyklus Δt eingeplant.

Es kommt also auch im Buszyklus Δtₛ mit der gestörten Kommunikationsbeziehung 21^{s} zu keinem Zeitversatz bei der Übermittlung des neuen Wertes für die Stellung des Ventils 55 mittels des Telegramms 13. Die Abwicklung des Telegramms 13 erfolgt nach wie vor im Zeitpunkt t2ₙ₊₁.

Die Wiederholung 21^{w} der gestörten Kommunikationsbeziehung 21^{s} wird im unmittelbar folgenden Buszyklus Δt zum Zeitpunkt t1ₙ₊₁^{w} abgewickelt. Für eine derartige Wiederholung 21^{w} ist ein Sonderkommunikationsteil t30 am Ende eines jeden Buszyklusses Δt vorgesehen. Projektierte Kommunikationsbeziehungen 13, 21 werden zu Beginn eines jeden Buszyklusses Δt in einem Normalkommunikationsteil t20 abgewickelt.

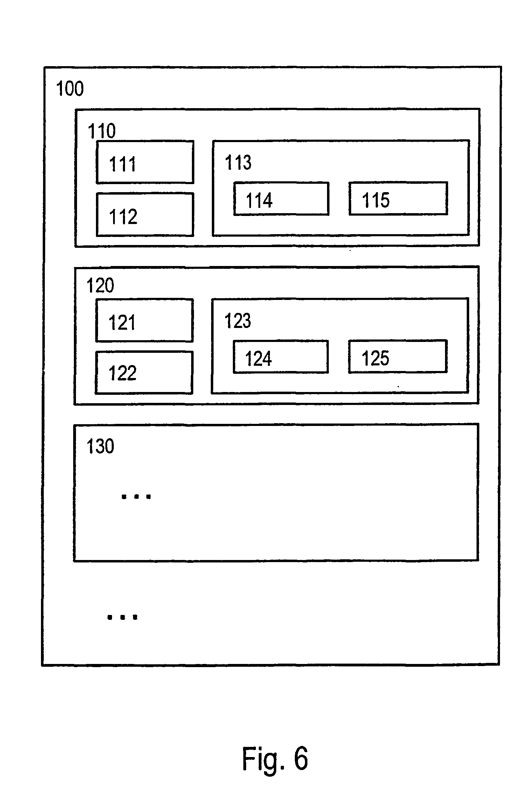

Die Anzahl der Wiederholungen 21^{w} einer gestörten Kommunikationsbeziehung 21^{s} wird gemäß FIG 6 in einem Wiederholungszähler 111 gezählt. Sollte der Wiederholungszähler 111 einen vorgegebenen Grenzwert 112 erreichen, so wird ab Erreichen des Grenzwertes 112 jede Wiederholung 21^{w} der gestörten Kommunikationsbeziehung 21^{s} mit einer Fehlerquittung (nicht dargestellt), die einen Fehlerquittierungscode umfasst, quittiert. Damit können dauerhaft gestörte Kommunikationsbeziehungen als solche erkannt und der nicht mehr erreichbare Kommunikationsteilnehmer als ausgefallen markiert werden.

Die Aufteilung eines Buszyklusses Δt in den Normal- und den Sonderkommunikationsteil t20 bzw. t30 führt zu einer Entkopplung zwischen Telegrammen 13, 21 entsprechend projektierter Kommunikationsbeziehungen und Telegrammwiederholungen 21^{w} aufgrund gestörter Kommunikationsbeziehungen 21^{s}. Die Telegrammwiederholung 21^{w} im Buszyklus Δt - d. h. im in FIG 5 zweiten Buszyklus - erfolgt entkoppelt von im Normalkommunikationsteil t20 abzuwickelnden projektierten (strichliert dargestellten) Kommunikationsbeziehungen.

Nachdem die Dauer des Buszyklusses Δt vorgegeben und konstant ist, ist entweder die Dauer des Normal- oder die Dauer des Sonderkommunikationsteils t20 bzw. t30 gleichfalls vorgegeben. Wenn die Dauer des Normalkommunikationsteils t20 vorgegeben ist, ergibt sich mit der festen Buszykluszeit Δt die Dauer des Sonderkommunikationsteils t30 und umgekehrt. Die Dauer des Normal- bzw. Sonderkommunikationsteils t20, t30 ist dabei so bemessen, daß während des Sonderkommunikationsteils t30 zumindest eine Telegrammwiederholung 21^{w} erfolgen kann.

FIG 6 zeigt eine Struktur 100, die im Speicher 5 (FIG 2a, 2b) eines Kommunikationsteilnehmers 1, 2, 3 vorgesehen ist. Die Struktur 100 weist für jede Kommunikationsbeziehung - zumindest für jede Kommunikationsbeziehung an welcher der betreffende Kommunikationsteilnehmer 1, 2, 3 beteiligt ist - ein eigenes Feld 110, 120, 130 auf. In jedem Feld 110, 120, 130 ist in einer ersten Position der Wert des Wiederholungszählers 111, 121, in einer zweiten Position der Grenzwert 112, 122 und in einer dritten Position 113, 123 der mindestens eine Schwellwert 114, 124 zusammen mit einer Referenz 115, 125 auf die bei Erreichen des Schwellwertes 114, 124 einzuleitende Maßnahme gespeichert.

Die Struktur dient zu kompakten Speicherung der wesentlichen Daten, die zu Abwicklung des Kommunikationsverfahrens vorgesehen sind. Durch die Speicherung einer Referenz 115, 125 auf die bei Erreichen des Schwellwertes 114, 124 einzuleitende Maßnahme ist der direkte Aufruf einer Programmroutine möglich, in der die Maßnahme programmiert ist.

Die Auslassungspunkte "..." einerseits in der Struktur 100 und anderseits im Feld 130 deuten an, daß die Struktur, je nach Anzahl der Kommunikationsbeziehungen, weitere Felder 110, 120, 130 umfassen kann und dass das Feld 130, ebenso wie eventuelle weitere Felder, grundsätzlich das gleiche Layout hat wie das Feld 110, 120.

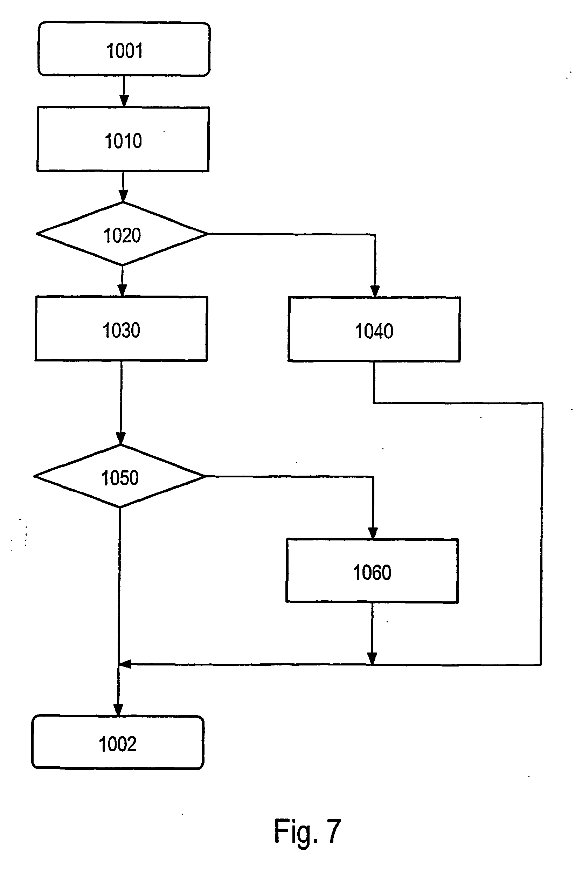

FIG 7 zeigt in einem Flussdiagramm einen Algorithmus zu wesentlichen Aspekten des Kommunikationsverfahrens, der im Schritt 1001 beginnt, sofern auch die Wiederholung 21^{w} der gestörten Kommunikationsbeziehung 21^{s} nicht fehlerfrei abgewickelt werden konnte. Im Schritt 1010 wird bei jeder Wiederholung 21^{w} einer gestörten Kommunikationsbeziehung 21^{s} (FIG 5) der Wiederholungszähler 111, 121 (FIG 6) inkrementiert.

Im Schritt 1020 wird überprüft, ob der Wiederholungszähler 111, 121 den Grenzwert 112, 122 (FIG 6) erreicht hat. Ist dies der Fall, so wird zum Schritt 1040 verzweigt und die Wiederholung 21^{w} der gestörten Kommunikationsbeziehung mit einem Fehlerquittierungscode 21" (FIG 4) quittiert. Nach Ausführung des Schrittes 1040 ist der Algorithmus im Schritt 1002 beendet. Wird im Schritt 1020 festgestellt, daß der Wiederholungszähler 111, 121 den Grenzwert 112, 122 noch nicht erreicht hat, wird der Algorithmus im Schritt 1030 fortgesetzt.

Im Schritt 1030 wird die Wiederholung 21^{w} der gestörten Kommunikationsbeziehung 21^{s} mit dem Sonderquittierungscode 21' (FIG 5) quittiert. Die Quittierung der Wiederholung 21^{w} der gestörten Kommunikationsbeziehung 21^{s} mit dem Sonderquittierungscode 21' bewirkt, dass auch eine fehlgeschlagene Wiederholung 21^{w} der gestörten Kommunikationsbeziehung 21^{s} wie eine fehlerfrei abgewickelte Kommunikation behandelt wird und eine nächste Wiederholung 21^{w} für einen folgenden Buszyklus eingeplant wird.

Im Schritt 1050 wird überprüft, ob der Wiederholungszähler 111, 121 den Schwellwert 114, 124 (FIG 6) - ggf. einen von mehreren Schwellwerten - erreicht hat. Ist dies der Fall, so wird zum Schritt 1060 verzweigt und eine Maßnahme, deren Referenz (Adresse) in der Position 115, 125 (FIG 6) gespeichert ist, ausgelöst. Ist z.B. der Grenzwert 112, 122 auf den Wert "20" gesetzt, so kann der Schwellwert 114, 124 z.B. auf den Wert "10" gesetzt werden. D.h. nach zehn erfolglosen Wiederholungen 21^{w} einer gestörten Kommunikationsbeziehung 21^{s} ist der Schwellwert 114, 124 erreicht und es kann eine entsprechende Maßnahme 115, 125 eingeleitet werden. Diese Maßnahme 115, 125 kann z.B. in der Ausgabe einer Warnmeldung auf einem Anzeigegerät (nicht dargestellt) bestehen, um auf die gestörte Kommunikationsbeziehung 21^{s} hinzuweisen. Die konkrete Maßnahme ist als Programmroutine (Unter- oder Teilprogramm) realisiert.

Als Referenz 115, 125 ist deren Startadresse in der Position 115, 125 hinterlegt. Bei Erreichen des Schwellwertes kann die Maßnahme 115, 125 aufgrund der gespeicherten Referenz 115, 125 direkt ausgelöst werden. Nach Ausführung des Schrittes 1060 ist der Algorithmus im Schritt 1002 beendet. Wird im Schritt 1050 festgestellt, dass der Wiederholungszähler 111, 121 den Schwellwert 114, 124 noch nicht erreicht hat, wird der Algorithmus unmittelbar im Schritt 1002 beendet.

Der Algorithmus wird jedesmal im Schritt 1001 gestartet, wenn auch die Wiederholung 21^{w} der gestörten Kommunikationsbeziehung 21^{s} nicht fehlerfrei abgewickelt werden konnte. Wurde dagegen bereits die erste Wiederholung 21^{w} der gestörten Kommunikationsbeziehung 21^{s} fehlerfrei abgewickelt, so wird diese - analog zum Schritt 1030 - mit dem Normalquittierungscode 21' quittiert. Eine Auswertung des Grenz- oder Schwellwertes 111, 121 bzw. 114, 124 ist in diesem Falle nicht erforderlich.

Es ist somit ein Verfahren zur zyklischen Kommunikation zwischen zur Steuerung oder Überwachung eines technischen Prozesses 50 vorgesehenen Kommunikationsteilnehmern 1, 2, 3 über einen Bus 4 angegeben, bei dem während jeweils eines Buszyklusses vorgebbarer Dauer Δt Kommunikationsbeziehungen 12, 13, 21, 31 abgewickelt werden, die für die Kommunikationsteilnehmer 1, 2, 3 projektiert wurden. Im Falle einer gestörten Kommunikationsbeziehung wird deren Wiederholung 21^{w} für einen folgenden Buszyklus eingeplant und die gestörte Kommunikationsbeziehung wird mit einem Sonderquittierungscode quittiert.

## Patentansprüche

1. Verfahren zur zyklischen Kommunikation zwischen zur Steuerung oder Überwachung eines technischen Prozesses (50) vorgesehenen Kommunikationsteilnehmern (1, 2, 3) über einen Bus (4), bei dem während jeweils eines Buszyklusses vorgebbarer Dauer (Δt) für die Kommunikationsteilnehmer (1, 2, 3) projektiert Kommunikationsbeziehungen (12, 13, 21, 31) abgewickelt werden,
**dadurch gekennzeichnet, dass** eine gestörte Kommunikationsbeziehung (21^{s}) mit einem Sonderquittierungscode (21') quittiert wird, der im laufenden Buszyklus wie ein eine ungestörte Kommunikationsbeziehung (21) anzeigender Normalquittierungscode (21') ausgewertet wird, und dass eine Wiederholung (21^{w}) der gestörten Kommunikationsbeziehung (21^{s}) für einen folgenden Buszyklus eingeplant wird.

2. Kommunikationsverfahren nach Anspruch 1, bei dem die Wiederholung (21^{w}) der gestörten Kommunikationsbeziehung (21^{s}) in einem folgenden Buszyklus im Anschluss an die für diesen Buszyklus projektierten Kommunikationsbeziehungen erfolgt.

3. Kommunikationsverfahren nach Anspruch 1 oder 2, bei dem die Wiederholung (21^{w}) der gestörten Kommunikationsbeziehung (21^{s}) für einen dem Buszyklus mit der gestörten Kommunikationsbeziehung (21^{s}) unmittelbar folgenden Buszyklus eingeplant wird.

4. Kommunikationsverfahren nach Anspruch 3, bei dem der Sonderquittierungscode (21') in einen Normalquittierungscode (21') umgewandelt wird.

5. Kommunikationsverfahren nach einem der Ansprüche 1 bis 4, bei dem mittels eines Wiederholungszählers (111, 121) die Anzahl der Wiederholungen der gestörten Kommunikationsbeziehung (21^{s}) gezählt wird.

6. Kommunikationsverfahren nach Anspruch 5, bei dem ab Erreichen eines für jede Kommunikationsbeziehung individuell vorgebbaren Grenzwertes (112, 122) für den Wiederholungszähler (111, 121) jede Wiederholung der gestörten Kommunikationsbeziehung (21^{s}) mit einem Fehlerquittierungscode (21") quittiert wird.

7. Kommunikationsverfahren nach Anspruch 5 oder 6, bei dem der Wiederholungszähler (111, 121) zumindest durch den an der gestörten Kommunikationsbeziehung (21^{s}) beteiligten Kommunikationsteilnehmer (1, 2, 3) auslesbar ist.

8. Kommunikationsverfahren nach einem der Ansprüche 5 bis 7, bei dem mindestens ein Schwellwert (114, 124) für den Wiederholungszähler (111, 121) vorgesehen ist, wobei durch den den Wiederholungszähler (111, 121) auslesenden Kommunikationsteilnehmer (1, 2, 3) bei Erreichen des Schwellwertes (114, 124) projektierte Maßnahmen eingeleitet werden.

9. Kommunikationsverfahren nach Anspruch 8, bei dem eine Struktur (100) in einem Speicher zumindest eines Kommunikationsteilnehmers (1, 2, 3) vorgesehen ist, die für jede Kommunikationsbeziehung (12, 13, 21, 31) ein Feld (110, 120, 130) aufweist, in dem in einer ersten Position der Wert des Wiederholungszählers (111, 121), in einer zweiten Position der Grenzwert (112, 122) und in einer dritten Position (113, 123) der mindestens eine Schwellwert (114, 124) zusammen mit einer Referenz (115, 125) auf die bei Erreichen des Schwellwertes einzuleitende Maßnahme gespeichert ist.

## Claims

1. Method for cyclic communication between communication stations (1, 2, 3) provided for controlling or monitoring a technical process (50), via a bus (4), communication sessions (12, 13, 21, 31) planned for the communication stations (1, 2, 3) being executed during in each case one bus cycle of predeterminable duration (Δt),
**characterized in that** a disturbed communication session (21^{s}) is acknowledged with a special acknowledgement code (21'), which is evaluated in the current bus cycle like a normal acknowledgement code (21') indicating an undisturbed communication session (21), and **in that** retransmission (21^{w}) of the disturbed communication session (21^{s}) is planned for a subsequent bus cycle.

2. Communication method according to Claim 1, in which the retransmission (21^{w}) of the disturbed communication session (21^{s}) takes place in a subsequent bus cycle following the communication sessions planned for this bus cycle.

3. Communication method according to Claim 1 or 2, in which the retransmission (21^{w}) of the disturbed communication session (21^{s}) is planned for a bus cycle immediately following the bus cycle with the disturbed communication session (21^{s}).

4. Communication method according to Claim 3, in which the special acknowledgement code (21') is converted into a normal acknowledgement code (21').

5. Communication method according to one of Claims 1 to 4, in which the number of retransmissions of the disturbed communication session (21^{s}) is counted by means of a retransmission counter (11, 121).

6. Communication method according to Claim 5, in which each retransmission of the disturbed communication session (21^{s}) is acknowledged with a fault acknowledgement code (21") after a limit value (112, 122), which can be predetermined individually for each communication session, for the retransmission counter (111, 121) has been reached.

7. Communication method according to Claim 5 or 6, in which the retransmission counter (111, 121) can be read out at least by the communication station (1, 2, 3) involved in the disturbed communication session (21^{s}).

8. Communication method according to one of Claims 5 to 7, in which at least one threshold value is provided (114, 124) for the retransmission counter (111, 121), planned measures being initiated by the communication station (1, 2, 3) reading out the retransmission counter (111, 121) when the threshold value (114, 124) is reached.

9. Communication method according to Claim 8, in which a structure (100) is provided in a memory of at least one communication station (1, 2, 3) which has for each communication session (12, 13, 21, 31) one field (110, 120, 130) in which the value of the retransmission counter (111, 121) is stored in a first position, the limit value (112, 122) is stored in a second position and the at least one threshold value (114, 124), together with a reference (115, 125) to the measure to be initiated when the threshold value is reached, is stored in a third position (113, 123).

## Revendications

1. Procédé de communication cyclique par l'intermédiaire d'un bus entre des participants (1, 2, 3) à une communication prévu pour commander ou contrôler un processus (50) technique, dans lequel on écoule, pendant respectivement un cycle de bus d'une durée (Δt) pouvant être prescrite, des relations (12, 13, 21, 31) de communication projetées pour les participants (1, 2, 3) à la communication,
**caractérisé en ce que** l'on accuse réception d'une relation (21^{s}) de communication par un code (21') particulier d'accusé de réception, qui est exploité dans le cycle de bus courant comme un code (21') d'accusé de réception normal indiquant une relation (21) de communication non perturbée, et **en ce que** l'on planifie une répétition (21^{w}) de la relation (21^{s}) de communication perturbée pour un cycle de bus suivant.

2. Procédé de communication suivant la revendication 1, dans lequel on effectue la répétition (21^{w}) de la relation (21^{s}) de communication perturbée dans un cycle de bus suivant, à la suite des relations de communication projetées pour ce cycle de bus.

3. Procédé de communication suivant la revendication 1 ou 2, dans lequel on planifie la répétition (21^{w}) de la relation (21^{s}) de communication perturbée pour un cycle de bus suivant directement le cycle de bus ayant la relation (21^{s}) de communication perturbée.

4. Procédé de communication suivant la revendication 3, dans lequel on transforme le code (21') d'accusé de réception particulier en un code (21') d'accusé de réception normal.

5. Procédé de communication suivant l'une des revendications 1 à 4, dans lequel on compte, au moyen d'un compteur (111, 121) de répétition, le nombre des répétitions de la relation (21^{s}) de communication perturbée.

6. Procédé de communication suivant la revendication 5, dans lequel, lorsque l'on atteint une valeur (122, 122) limite du compteur (111, 121) de répétition, valeur limite pouvant être prescrite individuellement pour chaque relation de communication, on accuse réception de chaque répétition de la relation (21^{s}) de communication perturbée par un code (21") d'accusé de réception d'erreur.

7. Procédé de communication suivant la revendication 5 ou 6, dans lequel le compteur (111, 121) de répétition peut être lu au moins par le participant (1, 2, 3) à la communication appartenant à la relation (21^{s}) de communication qui est perturbée.

8. Procédé de communication suivant l'une des revendications 5 à 7, dans lequel on prévoit au moins une valeur (114, 124) de seuil pour le compteur (111, 121) de répétition, dans lequel des participants (1, 2, 3) à la communication lisant le compteur (111, 121) de répétition prennent des mesures projetées lorsque la valeur (114, 124) de seuil est atteinte.

9. Procédé de communication suivant la revendication 8, dans lequel on prévoit une structure (100) dans une mémoire d'au moins un participant (1, 2, 3) à la communication, structure qui a, pour chaque relation (12, 13, 21, 31) de communication, un champ (110, 120, 130) dans lequel est mémorisée dans une première position la valeur du compteur (111, 121) de répétition, dans une deuxième position la valeur (112, 122) limite et dans une troisième position (113, 123) la au moins une valeur (114, 124) de seuil, ensemble avec une référence (115, 125) sur les mesures à prendre lorsque la valeur de seuil est atteinte.
